# EUROPÄISCHE PATENTSCHRIFT

(11) **EP 1 840 288 B1**
(45) Veröffentlichungstag und Bekanntmachung des Hinweises auf die Patenterteilung: **01.04.2015**
(21) Anmeldenummer: 07102230.5
(22) Anmeldetag: 13.02.2007
(51) Int. Cl.: E04B 2/74

(54) **Anordnung zur Aufbewahrung von Gegenständen mit Einbauelementen in einer Trockenbauwand und Befestigungsverfahren hierfür**
Assembly for storing objects with installation elements in a dry wall and attaching method therefor
Agencement destiné au stockage d'objets à l'aide d'éléments de construction dans un mur constitué d'éléments préfabriqués et son procédé de fixation

(30) Priorität: 29.03.2006 DE 202006005062 U; 28.10.2006 DE 202006016532 U
(43) Veröffentlichungstag der Anmeldung: 03.10.2007
(73) Patentinhaber: TREL Systems AG, 44627 Herne (DE)
(72) Erfinder: Amlang, Pierre, 46236 Bottrop (DE); Amlang, Heinrich, 46244 Bottrop (DE)
(74) Vertreter: Moser Götze & Partner Patentanwälte mbB

(56) Entgegenhaltungen:
- EP-A1- 0 478 862
- WO-A1-98/33995
- WO-A1-2004/043205
- DE-A1-102005 006 223
- GB-A- 1 281 570
- US-A- 3 962 840
- US-A- 4 774 792
- US-A- 5 586 934
- US-A1- 2005 034 409
- US-B1- 6 363 663

## Beschreibung

Die Erfindung betrifft eine Anordnung nach Anspruch 1.

Auch betrifft die Erfindung ein Verfahren nach Anspruch 14.

Aus dem Stand der Technik sind allgemein Trockenbauwände bekannt, die aus einer Rahmenkonstruktion und daran befestigten Trockenbauplatte, insbesondere daran angeschraubten Gipskartonplatten, bestehen. Die Rahmenkonstruktion besteht im Wesentlichen aus vertikalen Ständerprofilen, insbesondere standardisierte CW-Profile, die oben und unten in horizontale Rahmenprofile, insbesondere standardisierte UW-Profile, eingesteckt und damit verbunden werden. Das Ständerprofil hat einen c-förmigen Querschnitt und das Rahmenprofil einen u-förmigen. Derartige Trockenbauwände werden als Wände, Vorbauten und Verkleidungen eingesetzt.

Auch ist allgemein aus dem Stand der Technik bereits bekannt, in derartige Trockenbauwände Einbauelemente wie beispielsweise Regale, Schrankkorpusse oder Schränke in entsprechende Aussparungen in den Trockenbauwänden einzubauen oder derartige ausgekleidete Aussparungen als Ablagen zu nutzen, um den Hohlraum innerhalb der Trockenbauwände und den Hohlraum gegebenenfalls den Hohlraum zwischen einer als Verkleidung oder Vorwand dienenden Trockenbauwand und der weiteren Wand nutzen zu können. Derartige Aussparungen werden individuell in den Trockenbauwänden aus wandgleichen Materialien gefertigt. Mangels eines Standards sind solche Arbeiten sind sehr zeitintensiv. Insbesondere sind die umlaufenden Kanten solcher Aussparungen mit einem Kantenschutz zu versehen. In der Regel sind solche individuellen Aussparungen mit Gipskartonplatten beplankt und bilden somit keinen eigenstabilen Baukörper. Insbesondere sind die umlaufenden Kanten solcher Aussparungen zusätzlich mit einem Kantenschutz zu versehen. Zudem sind zur Befestigung der eine Nische bildenden Gipskartonplatten aufwändige weitere Konstruktionen an den Ständerprofilen anzubringen. Auch bietet das wandgleiche Material keinen belastbaren Oberflächen zur Anbringung von Einlegeböden oder Schranktüren.

Des Weiteren sind bisher die Einbauelemente, die aus Holz oder Holzwerkstoffen hergestellt sind, grundsätzlich individuell an die baulichen Gegebenheiten anzupassen, was arbeits- und kostenintensiv ist. Ferner gestaltet sich die Montage eines Einbauelementes in vorgesetzte Trockenbauwände als schwierig, da zumeist das Einbauelement entfernt vom Fußboden eingebaut werden soll und je nach Dimension schwergewichtig ist. Außerdem sind die Standard - Ständerprofile durch neue europäische Normen in ihrer Materialstärke reduziert worden und im Zustand vor einer beidseitigen Beplankung sehr instabil. Dieser Nachteil ist insbesondere von Bedeutung, weil eine Vorwand nur einseitig zu beplanken ist. Ein weiteres Problem besteht in der Herstellung eines Zufrieden stellenden Abschlusses der Frontkanten des Einbauelementes mit der Trockenbauwand. Die Trockenbauwände sowie deren Ständerprofile werden in üblicher Weise lotrecht montiert. Entsprechend müssen bei der Montage der Einbauelemente diese unter Zuhilfenahme von Wasserwaagen und Schrauben an den Ständerprofilen ausgerichtet und fest angeschraubt werden. Hierbei ist dann ein späteres Ausrichten der Einbauelemente in einer Wandkonstruktion jedes Mal mit einem völligen Entfernen der Schrauben somit nahezu einem Totalausbau verbunden. Bei nur geringen Ausrichtungen stören die bereits vorhandenen Schraubenlöcher in den Ständerprofilen, weil die Schrauben meist wieder in die vorhandenen Löcher fliehen. Ein weiteres Problem ist auch insbesondere eine gewünschte Bündigkeit der Frontkanten der Einbauelemente mit der späteren Wandfläche. Hier ist ständiges Messen und das Arbeiten mit Schraubzwingen oder einem Helfer erforderlich. Dies ist nur schwer von einem einzigen Monteur erreichbar und sicherlich nur in mehreren Arbeitsgängen. Werden mehrere solcher Einbauelemente übereinander und beabstandet mit den glatten lotrechten Seitenflächen an den glatten lotrechten, geschlossenen Seitenflächen von Ständerprofilen angeschraubt ergibt sich aufgrund der schwachen Materialstärke der Profile eine instabile Situation. Würden die Einbauelemente zwischen den offenen Seitenflächen zweier Ständerprofile angeschraubt, wurde zunächst die Zugkraft der Schraube den Steg und danach die ebene Auflagefläche der Schenkel verformen. Zudem wäre der Eintritt der Schraube in das dünne Stahlblech des Stegs zu weit vom Kopf einer Schraube im Inneren des Einbauelements entfernt, so dass das Einbauelement absacken würde.

Aus der internationalen Patentanmeldung WO 98/33995 A1, die alle Merkmale des Oberbegriffs des Anspruchs 1 offenbart, ist bereits eine Verstärkungsplatte aus Metall bekannt, die in eine Trockenbauwand eingebaut werden kann, um schwere Gegenstände wie beispielsweise einen Waschtisch an einer Trockenbauwand befestigen zu können. Die Trockenbauwand besteht in üblicher Weise aus einer Rahmenkonstruktion mit vertikalen Ständerprofilen und horizontalen Rahmenprofilen, die mit Gipskartonplatten verkleidet werden. An den Orten innerhalb der Trockenbauwand, an denen eine Befestigung von schweren Gegenständen geplant ist, werden die Verstärkungsplatten an die vertikalen Ständerprofile angeklemmt. Hierfür weisen die Verstärkungsplatten entsprechende hakenartige Vorsprünge auf. Anschließend werden die Verstärkungsplatten dann von den Gipskartonplatten verkleidet und verbleiben somit in der Trockenbauwand.

Außerdem ist aus der Patentschrift US 3,962,840 bereits ein Verkleidungselement für Raumecken zwischen Wand und Decke durch Winkelprofile bekannt, hierbei werden die Winkelprofile an einem in der Raumecke angeordneten U-Profil über Klammern aus Metall klemmend befestigt.

Ferner ist aus dem US-Patent US 5,586,934 ein Wandsafe bekannt, der getarnt in einer Zuluftöffnung einer Klimaanlage in einer Wand eines Raumes angeordnet ist. Hierbei ist der Wandsafe von einem Lüftungsgitter abgedeckt. An die Zulüftöffnung schließt sich in üblicher Weise ein Luftkanal in der Wand an.

Ausgehend von diesem Stand der Technik liegt der vorliegenden Erfindung die Aufgabe zu Grunde, eine Anordnung zur Aufbewahrung von Gegenständen mit Einbauelementen in einer Trockenbauwand und ein Befestigungsverfahren hierfür zu schaffen, das sich durch eine einfache Montage auszeichnet.

Diese Aufgabe wird durch eine Anordnung zur Aufbewahrung von Gegenständen mit Einbauelementen in einer Trockenbauwand mit den Merkmalen des Anspruches 1 und ein Befestigungsverfahren mit den Merkmalen des Anspruches 14 gelöst. Vorteilhafte Ausgestaltungen der Erfindung sind in den Unteransprüchen 2 bis 13 angegeben.

Erfindungsgemäß wird bei einer Anordnung, die in einer Trockenbauwand angeordnete Einbauelemente umfasst, wobei die Trockenbauwand aus einer Rahmenkonstruktion mit vertikalen Ständerprofilen, insbesondere standardisierten CW-Profilen, besteht, an denen die Einbauelemente befestigt sind, wobei die Einbauelemente über Halteteile in einem Befestigungszustand klemmend an den Ständerprofilen befestigt sind, wobei das Ständerprofil einen c-förmigen Querschnitt hat, zwei eine Öffnung begrenzende und gegenüberliegende Stege an Schenkeln aufweist und im Befestigungszustand das Halteteil den Steg hintergreift und das Einbauelement zwischen zwei Ständerprofilen über die Halteteile befestigt ist eine einfache Montagemöglichkeit, dadurch erreicht, dass die Einbauelemente als Schrankkorpusse ausgebildet zur Aufbewahrung von Gegenständen ausgebildet sind und dass das Halteteil im Befestigungszustand die Stege an das Einbauelement drückt, und dass die Anordung weiter eine Schraube enthält, wobei das Halteteil über die Schraube in den Befestigungszustand bringbar ist und die Schraube von innerhalb des Einbauelements anziehbar ist. Das c-förmige Ständerprofil wird durch die Halteteile im Befestigungszustand geschlossen und somit ausgesteift. Die Verwendung der Halteteile vereinfacht die Montage und ermöglicht auch eine wiederholtes Montieren in einer nahezu identischen Position, da die klemmende Befestigung im Vergleich zu einer Verschraubung des Haltelementes in dem Ständerprofil keine bleibende Veränderung des Ständerprofils bewirkt, wie beispielsweise ein Loch von einer Schraube. Bei einem erneuten Befestigen in einer ähnlichen Position wird die Schraube wieder in die alte Bohrung in dem Ständerprofil fliehen und die gewollte Neupositionierung zu Nichte machen. Auch wird hierdurch besonders einfach eine klemmende Befestigung erreicht.

Eine weitere Montagevereinfachung wird dadurch erreicht, dass die Halteteile derart ausgebildet sind, dass in einem Zwischenzustand die Halteteile an den Einbauelementen gehalten und für eine Ausrichtung der Einbauelemente in Bezug auf die Ständerprofile entlang der Ständerprofile verschiebbar sind. Somit können die Halteteile an dem Ständerprofil befestigt werden, wenn das Einbauelement sich noch auf dem Boden befindet. Anschließend kann das Einbauelement entlang der Ständerprofile nach oben geschoben werden und in der gewünschten Position endgültig befestigt werden. Dies kann leicht von einer Person erledigt werden.

Auch wird eine leichte Justierung und auch Nachjustierung der Einbauelemente dadurch erreicht, dass die Einbauelemente über die Halteteile lösbar an den Ständerprofilen befestigt sind.

Konstruktiv einfach ist das Halteteil klammerförmig mit zwei voneinander beabstandeten Schenkelteilen ausgebildet. Im Befestigungszustand drücken die Schenkelteile die Stege an das Einbauelement.

Eine besonders stabile Befestigung wird dadurch erreicht, dass das Einbauelement Seitenwände aufweist, in den Außenflächen eine oder mehrere Nuten angeordnet sind, die als Nutgrund Gegenflächen und zumindest äußere Seitenflächen aufweisen, und im Befestigungszustand, das Halteteil das Ständerprofil an die Gegenfläche drückt. Dabei werden auch die Schenkelteile des Ständerprofils an die äußeren Seitenflächen der Nut gedrückt. Das c-förmige Ständerprofil wird durch das Einbauelement im Befestigungszustand geschlossen und somit ausgesteift. Auch verändert das Halteteil die Außenabmessungen des Ständerprofils nicht, so dass die Beplankung mit den Trockenbauplatten in üblicher Weise erfolgen kann.

Eine besondere leichte Fertigstellung der Trockenbauwand wird dadurch erreicht, dass die Position des Einbauelements in Bezug auf das Ständerprofil im Sinne einer Einbautiefe über das Halteteil, das sich an eine äußere Seitenfläche und/oder innere Seitenfläche an dem Einbauelement anlegt, bestimmt ist. Hierbei ist das Ständerprofil mit seinem vorderen Schenkel im Befestigungszustand in einem Abstand zu einer Vorderfläche des Einbauelements angeordnet, der im Wesentlichen der Dicke einer an dem Ständerprofil zu befestigenden Trockenbauplatte entspricht. Eine Beplankung der Rahmenkonstruktion mit Trockenbauplatten führt somit sofort zu einem bündigen Übergang zwischen der Trockenbauplatte und dem Einbauelement. Dieser Gedanke ist unabhängig von dem Halteteil von eigenständiger erfinderischer Bedeutung.

Eine besonders einfache Ausrichtung des Einbauelements zu dem Ständerprofil wird dadurch erreicht, dass die äußere Seitenfläche und/oder innere Seitenfläche parallel zu einer Vorderfläche des Einbauelements verlaufen. Das Einbauelement nimmt somit die Ausrichtung der Ständerprofile an.

Eine besonders stabile Befestigung des Halteteils an dem Einbauelement wird dadurch ermöglicht, dass in den Außenflächen der Seitenwände eine erste Nut und eine zweite Nut angeordnet sind, die voneinander beabstandet sind, so dass deren äußere Seitenflächen einen Abstand aufweisen, der im Wesentlichen der Breite des Ständerprofils entspricht, und die Breite der Nuten, im Wesentlichen jeweils der Breite der Stege der Ständerprofile entspricht.

In bevorzugter Ausgestaltung ist vorgesehen, dass das Einbauelement im Wesentlichen rechteckig ist und aus zwei Seitenwänden, einer Bodenwand, einer Rückwand und einer Deckelwand besteht.

Ein sauberer Anschluss des Einbauelement an die Trockenbauplatte innerhalb der Trockenbauwand wird dadurch erreicht, dass das Einbauelement eine Vorderfläche aufweist, die eine Anschlussfläche umfasst, um zwischen dem Einbauelement und einer Trockenbauplatte ein Füllmaterial einzubringen, und die Anschlussfläche gegenüber der Vorderfläche in Richtung des Ständerprofils zurückweicht.

Wenn die Anschlussfläche eine schräge Ebene ist, die an einer inneren Kante der Vorderfläche beginnt, wird eine gute Haftung des Füllmaterials erreicht. Die Haftung wird weiter verbessert, wenn auf der Anschlussfläche ein die Haftung für das Füllmaterial erhöhendes Element angeordnet ist.

Erfindungsgemäß wird bei einem Verfahren zur Befestigung von Einbauelementen in einer Trockenbauwand innerhalb einer Anordnung zur Aufbewahrung von Gegenständen, wobei die Trockenbauwand einer Rahmenkonstruktion mit vertikalen Ständerprofilen, insbesondere standardisierten CW-Profilen, aufweist, an denen die Einbauelemente befestigt sind, eine vereinfachte Montage durch die folgenden Schritten erreicht:
Befestigen eines klammerförmigen Halteelementes mit Schenkelteilen über eine Schraube an einer Seitenwand des Einbauelements in der Weise, das die Schenkelteile zur Anlage an Gegenflächen in einer Nut des Einbauelements kommen,
Eindrücken des Halteelements in eine Öffnung des Ständerprofils, wodurch das Ständerprofil mit seinen Schenkeln aufgeweitet wird und der Schenkel mit seinen Stegen zur Anlage an die Gegenfläche kommt,
Herausschieben des Halteelements aus der bzw. den Nuten über die Schraube von innerhalb des Einbauelements in Richtung des Ständerelements,
Hineinbewegen der Schenkel mit seinen Stegen in die Nut bzw. die Nuten, Anziehen der Schraube von innerhalb des Einbauelements, wodurch das Halteelement in Richtung des Einbauelements bewegt wird und die Stege auf die Gegenfläche der Seitenwand drückt.

Die zuvor beschriebene Anordnung eignet sich als Vorwand, Nischenverkleidung und Trennwand, kann aber auch nach Art eines Schranks gebaut werden und somit nicht deckenhoch.

Nachfolgend wird die vorliegende Erfindung an Hand von in Zeichnungen dargestellten mehreren Ausführungsbeispielen näher erläutert. Es zeigen:
- Figur 1: eine Ansicht einer Rahmenkonstruktion einer Gipskartonwand mit montierten Einbauelementen,
- Figur 2: ein Ständerprofil im Querschnitt,
- Figur 3: eine perspektivische Ansicht eines Einbauelementes in Form eines Schrankkorpus,
- Figur 4: eine perspektivische Ansicht einer Seitenwand eines Einbauelementes nach Figur 3,
- Figuren 5.1 bis 5.3: perspektivische Ansichten einer Seitenwand eines Einbauelementes und eines Ständerprofils in verschiedenen Montagephasen,
- Figur 6: eine Draufsicht auf ein Einbauelement in einer zweiten Ausführungsform und
- Figur 7: eine Draufsicht auf ein Einbauelement in einer dritten Ausführungsform.

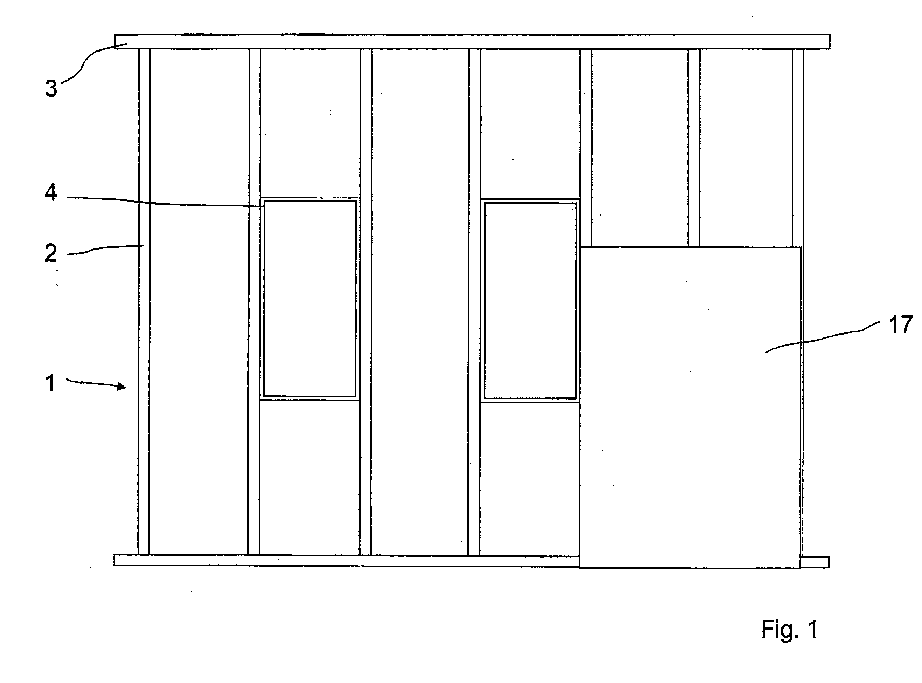

Die Figur 1 zeigt eine Rahmenkonstruktion 1 einer Trockenbauwand, insbesondere Gipskartonwand, mit vertikalen Ständerprofilen 2, insbesondere standardisierten CW-Profilen, die oben und unten in horizontale Rahmenprofile 3, insbesondere standardisierte UW-Profile, eingesteckt und damit verbunden werden können. Auf die Ständerprofile 2 und die Rahmenprofile 3 werden in üblicher Weise die Trockenbauplatten 17, insbesondere Gipskartonplatten geschraubt, um die Trockenbauwand zu vervollständigen. Das Ständerprofil 2 hat einen c-förmigen Querschnitt und das Rahmenprofil 3 einen u-förmigen. Der Abstand zwischen benachbarten Ständerprofilen 2 ist in üblicher Weise auf die Breite der nicht dargestellten Trockenbauplatten oder anderer geeigneter Platten abgestimmt. Zwischen zwei Ständerprofilen 2 ist ein erfindungsgemäßes Einbauelement 4 in Form eines Schrankkorpus eingebaut. Die Maße der Einbauelemente 4 sind grundsätzlich frei wählbar, können aber an die üblichen Abstände zwischen den Ständerprofilen 2 angepasst werden.

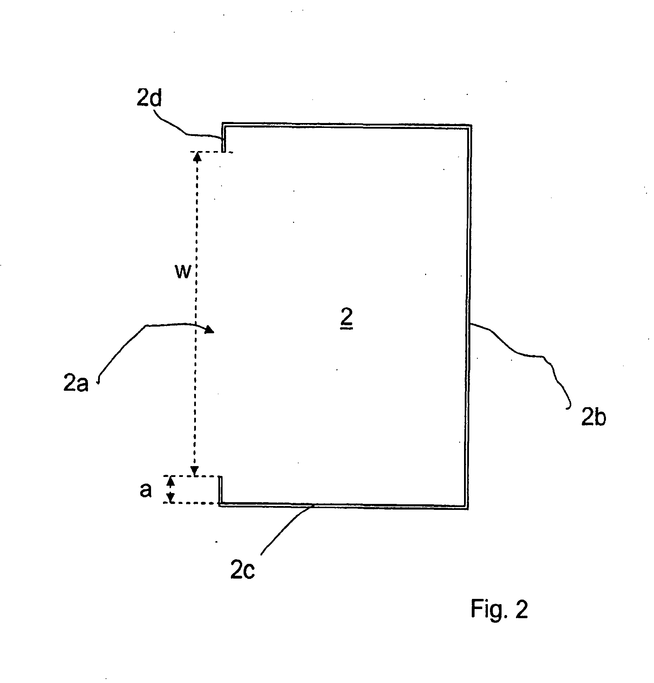

In der Figur 2 ist ein Querschnitt des Ständerprofils 2 gezeigt. Der Querschnitt zeigt deutlich die c-förmige Form des standardisierten Ständerprofils 2 mit einer Öffnung 2a. Das Ständerprofil 2 weist eine flachprofilförmige Basis 2b aufweist, an der sich seitlich jeweils rechtwinklig ein Schenkel 2c anschließt. Um die zuvor beschriebene c-förmige Gestalt zu erreichen, ist an dem der Basis 2b abgewandten Ende jeweils ein Steg 2d angeordnet, der sich rechtwinklig zu dem Schenkel 2c und nach innen erstreckt. Die Stege 2d erstrecken sich somit parallel zur Basis 2b und haben ausgehend von den Schenkeln 2c jeweils eine Breite a. Zwischen den einander zugewandten Enden der Stege 2d verbleibt die Öffnung 2a, deren lichte Weite w ist.

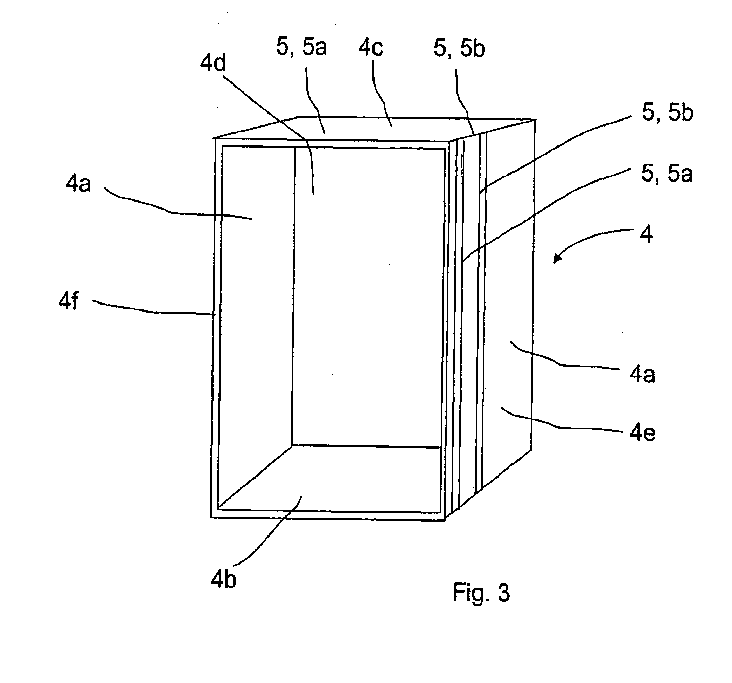

Die Figur 3 zeigt eine perspektivische Ansicht eines Einbauelementes 4 in Form eines reckteckigen Schrankkorpus mit zwei zueinander parallelen und voneinander beabstandeten Seitenwänden 4a, die unten über eine Bodenwand 4b und oben über eine Deckelwand 4c miteinander verbunden sind. Nach hinten ist das Einbauelement 4 über eine Rückwand 4d geschlossen. Des Weiteren ist ersichtlich, dass an den Außenflächen 4e der Seitenwände 4a eine Nut 5 angeordnet ist. Die Nut 5 ist im vorliegenden Ausführungsbeispiel in eine vordere erste Nut 5a und eine hintere zweite Nut 5b aufgeteilt, die zueinander parallel und voneinander beabstandet verlaufen. Außerdem sind die erste Nut 5a und eine zweite Nut 5b parallel zur Vorderfläche 4f der Seitenwand 4a ausgerichtet. Diese Nuten 5, 5a, 5b können auch an der Deckelwand 4c und der Bodenwand 4b vorgesehen sein, so dass diese Nuten 5, 5a, 5b dann an den Außenseiten 4e des Einbauelements 4 umlaufend sind. Bevorzugt sind die Nuten 5, 5a, 5b nur in den Seitenwänden 4a angeordnet, da hierüber eine ausreichende Befestigung des Einbauelements 4 an den Ständerprofilen 2 erreicht werden kann. Außerdem wird die Befestigung des Einbauelements 4 in der Rahmenkonstruktion 1 zusätzlich dadurch verstärkt, dass in einem späteren Arbeitsschritt die Rahmenkonstruktion 1 mit Trockenbauplatten 17 beplankt und das Einbauelement 4 somit zusätzlich in die Wand eingebunden wird.

Das Einbauelement 4 ist aus Holzwerkstoffen und/oder vergleichbaren Werkstoffen, vorzugsweise aus MDF, Sperrholz oder Holzwerkstoffen mit geringer Schwindung, hergestellt. Ein derartiges Einbauelement 4 kann mit handelsüblichen Türen aus Holz, Metall oder Glas sowie Kombinationen hiervon zur Bildung eines Schrankes verschlossen werden. Auch können Einlegeböden aus geeigneten Materialien vorgesehen werden. Des Weiteren kann das Einbauelement 4 auch ohne weitere Einbauten als Ablage in Form einer hierdurch geschaffenen Nische verwendet werden.

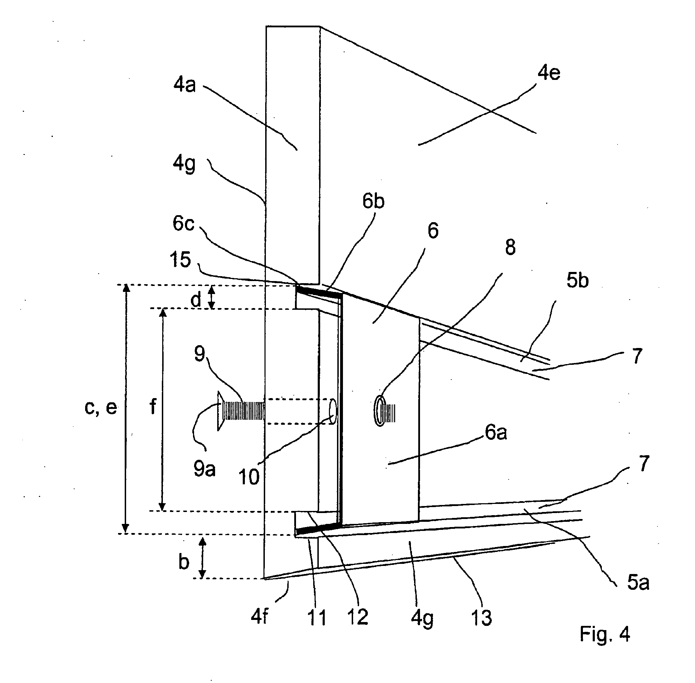

In der Figur 4 ist eine perspektivische Ansicht einer Seitenwand 4a eines Einbauelementes 4 gezeigt. Neben der Seitenwand 4a mit der ersten Nut 5a und der zweiten Nut 5b ist auch ein klammerartiges Halteteil 6 gezeigt, mit dem das Einbauelement 4 an den nicht dargestellten Ständerprofilen 2 befestigt wird. Das Halteteil 6 ist im Querschnitt gesehen u-förmig ausgebildet mit einem Basisteil 6a und zwei sich hieran seitlich anschließenden Schenkelteilen 6b. Der von dem Basisteil 6a und den Schenkelteilen 6b jeweils eingeschlossene Winkel ist ein rechter Winkel oder im Bereich zwischen 90 Grad und 120 Grad vorzugsweise etwa 110 Grad. Mit seinen dem Basisteil 6a abgewandten Enden der Schenkelteile 6b ruht das Halteteil 6 im Einbauzustand auf einer Gegenfläche 7, die jeweils von dem Grund der Nuten 5a, 5b gebildet wird.

Des Weiteren zeigt die Figur 4, dass zentral in dem Basisteil 6a des Halteteils 6 eine Gewindebohrung 8 angeordnet ist, in der eine Schraube 9 mit einem entsprechenden Gewinde gehalten ist. Diese Schraube 9 wird ausgehend von dem Halteteil 6 durch eine Bohrung 10 in der Seitenwand 4a geführt und kann somit von der Innenfläche 4g des Einbauelements 4 angezogen werden. Die Bohrung 10 ist mittig zwischen der ersten Nut 5a und der zweiten Nut 5b angeordnet. Im angezogen Zustand stützt sich der Kopf 9a der Schraube 9 an der Innenseite 4g der Seitenwand 4a ab und die Schraube 9 über deren Gewindegang an dem Halteteil 6, das mit seinen Schenkeln 6b an den Gegenflächen 7 ruht. Außerdem werden im angezogenen Zustand der Schraube 9 die Schenkelteile 6b des Halteteils 6 mit ihren äußeren Endbereichen 6c in Richtung der der ersten Nut 5a und der zweiten Nut 5b gedrängt. Die äußere Seitenfläche 11 schließt sich unter einem rechten Winkel an die Gegenfläche 7 an, die sich in einer Ecke 15 schneiden.

In Bezug auf die Dimensionierung und die Anordnung der ersten Nut 5a und der zweiten Nut 5b ist der Figur 4 zu entnehmen, dass in deren Längsrichtung gesehen diese Nuten 5a, 5b im Bereich ihrer Gegenflächen 7 - dem eigentlichen Nutgrund - eine Breite d aufweist. Die Breite d entspricht in etwa der Breite a der Stege 2d der Ständerprofile 2. Des Weiteren haben die ersten und zweiten Nuten 5a, 5b einen rechteckigen Querschnitt. Außerdem entspricht die Breite des Halteteils 6 dem Abstand e der Enden der äußeren Endbereiche 6c der Schenkelteile 6b des Halteteils 6. Auch weist die erste Nut 5a und die zweite Nut 5b jeweils eine innere Seitenfläche 12 auf, deren Abstand f zueinander etwa der lichten Weite w der Öffnung 2a des Ständerprofils 2 entspricht. Der Abstand e der Enden der äußeren Endbereiche 6c der Schenkelteile 6b des Halteteils 6 stimmt in etwa mit dem Abstand e zwischen den beiden äußeren Seitenflächen 12 der Nuten 5a und 5b überein. In der Figur 4 ist ein weiteres wichtiges Maß dargestellt und zwar der Abstand b, der zwischen der Vorderfläche 4f der Seitenwand 4a und der äußeren Seitenfläche 11 der ersten Nut 5a. Der Abstand b entspricht dem Maß der Dicke der Trockenbauplatten 17 für die Beplankung der Rahmenkonstruktion 1. Somit wird erreicht, dass die an den Ständerprofilen 2 und den Rahmenprofilen 3 befestigten Trockenbauplatten 17 bündig zu den Vorderflächen 4f der Seitenwand 4a sind.

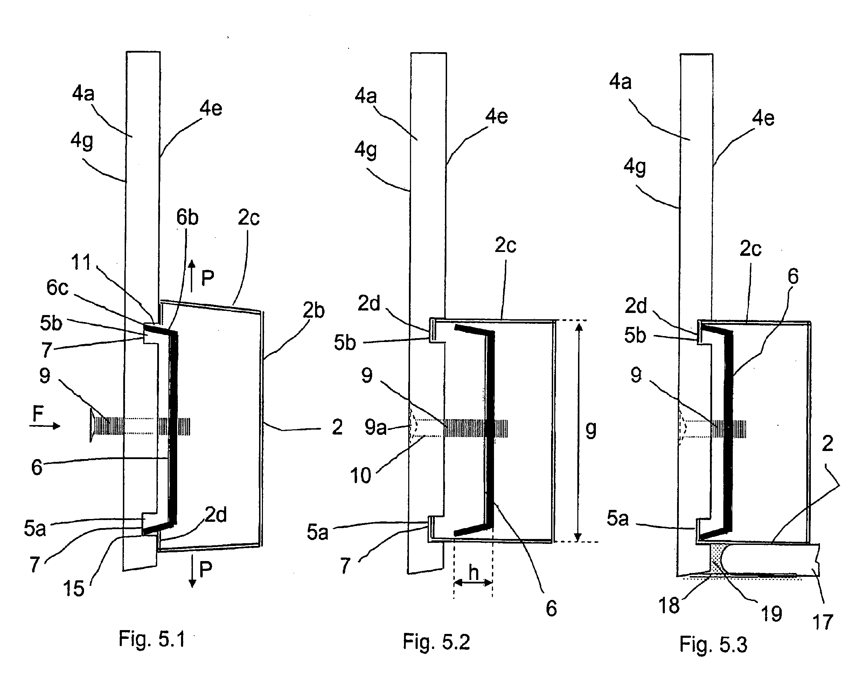

Im Zusammenhang mit dem bündigen Abschluss der Trockenbauplatten 17 mit den Vorderflächen 4f der Seitenwand 4a ist der Figur 4 zusätzlich zu entnehmen, dass die Seitenwand 4a eine der Trockenbauplatten 17 zugewandte Anlagefläche 4g aufweist. Diese Anlagefläche 4g ist über eine angrenzende Anschlussfläche 13 mit der Vorderfläche 4f verbunden. Die Anschlussfläche 13 dient dazu, um ein Füllmaterial 19 (siehe Figur 5.3), das zum Verfüllen des zwischen der Trockenbauplatte 17 und der Seitenwand 4a entstehenden Spaltes zum Einsatz kommt, eine vergrößerte Haftfläche zu bieten. Innerhalb der Anschlussfläche 13 sind Aussparungen 14 in Form von Einkerbungen vorgesehen, um die Haftung zwischen dem Füllmaterial 19 und der Seitenwand 4a durch die somit entstehende Verzahnung zu verbessern. Unterschiedliche Materialien wie z.B. Gipskarton und MDF weisen einen unterschiedlichen Längenschwund vor, weswegen sich bei glatten Anschlussfläche 13 entlang der Seitenwände 4a Risse im Füllmaterial bilden können, was insbesondere bei größeren Längenmaßen der Seitenwände 4a der Fall sein kann. In der Figur 4 ist die Anschlussfläche 13 ausgehend von der Vorderfläche 4f als schräge zu dem Spalt abfallende Fläche ausgebildet. In bevorzugter Ausgestaltung verläuft diese Anschlussfläche 13 bis zu einer auf eine Kante reduzierte Vorderfläche 4f. Grundsätzlich ist es auch möglich, die Anschlussfläche 13 parallel zu der Vorderfläche 4f auszurichten. Um einen Raum für das Füllmaterial 19 zu bilden, ist diese Anschlussfläche 13 gegenüber der Vorderfläche 4f nach hinten zurück versetzt. Auch ist es möglich, zusätzlich auf der Anschlussfläche 13 eine Armierungsbahn 18 (siehe Figur 5.3) vorzusehen, um die Stabilität des Füllmaterials 19 weiter zu erhöhen.

Die Figuren 5.1 bis 5.3 zeigen perspektivische Ansichten einer Seitenwand 4a eines Einbauelementes 4 und eines Ständerprofils 2 in verschiedenen Montagephasen. Der erste Montageschritt ist in der Figur 5.1 gezeigt. Das Halteteil 6 ruht mit seinen äußeren Endbereichen 6c der beiden Schenkelteile 6b auf den Gegenflächen 7 in den Nuten 5a und 5b. Auch liegen die äußeren Endbereiche 6c an den äußeren Seitenflächen 11 der Nuten 5a und 5b an. Da die Nuten 5a und 5b einen rechteckigen Querschnitt haben, schneiden sich die Gegenfläche 7 und die äußere Seitenflächen 11 in einer Ecke 15, in der entsprechend auch die äußeren Endbereiche 6c der beiden Schenkelteile 6b ruhen. Das Halteteil 6 wird in dieser Position durch die Schraube 9 gehalten, die bei in den Nuten 5a und 5b ruhenden Halteteil 6 in dessen Gewindebohrung 8 einige wenige Gewindegänge eingeschraubt worden ist. Da der Durchmesser der Bohrung 10 in dem Seitenteil 4a geringfügig kleiner ist als der Außendurchmesser des Gewindes der Schraube 9, wird die Schraube 9 auch in der Bohrung 10 gehalten und somit das Halteteil 6 in der Startposition gemäß Figur 5.1. In der Startposition ragt das Halteteil 6 aus den Nuten 5a und 5b hinaus und steht somit insgesamt aus der Seitenwand 4a hinaus.

Gemäß der Figur 5.1 wird ein korpusartiges mit seinen wie zuvor beschriebenen Halteteilen 6 in eine vorbereite Rahmenkonstruktion 1 eingebaut. Üblicher Weise wir hierfür das Einbauelement 4 auf dem Boden abgestellt und seitlich in Richtung eines bereits eingebauten vertikalen Ständerprofils 2 geschoben. In Figur 5.1 ist ein Ständerprofil 2 der Rahmenkonstruktion 1 gezeigt, in dessen Öffnung 2a ein Halteteil 6, das mit einer linken Seitenwand 4a verbunden ist, eingedrückt ist, bis die Außenfläche 4e der linken Seitenwand 4a zur Anlage an die Stege 2d des Ständerprofils 2 kommen. Je nach Größe des Einbauelement 4 bzw. Länge der Seitenwand 4a sind mit Abstand zueinander mehrere Halteteile 6 entlang der Nuten 5a und 5b angeordnet, die dann alle wie zuvor beschrieben in das Ständerprofil 2 eingedrückt werden. Hierdurch weitet sich das Ständerprofil 2 auf, indem dessen Schenkel 2c in Richtung P sich nach außen bewegen. In dieser Startposition versperrt das Halteteil 6 die Nuten 5a und 5b.

In der Figur 5.2 ist der nächste Montageschritt gezeigt. Hierfür werden die Schrauben 9 der Halteteile 6 beispielweise mit einem Hammer in die Richtung F in die Bohrung 10 der Seitenwand 4a soweit eingetrieben, bis der Kopf 9a der Schraube 9 zur Anlage an die Innenfläche 4g der Seitenwand 4a kommt. Hierdurch verlässt das Halteteil 6 die Nuten 5a und 5b, das Ständerprofil 2 nimmt wieder seine ursprüngliche rechteckige Form ein und die Schenkel 2c mit den Stegen 2d rutschen in die Nuten 5a und 5b.

In dem letzten Montageschritt gemäß Figur 5.3 werden von der Innenfläche 4g der Seitenwand 4a her die Schrauben 9 angezogen, so dass das Halteteil 6 sich in Richtung der beiden Nuten 5a und 5b bewegt, dort sich von innen an die Stege 2d anlegt und die Stege 2d und die Schenkel 2c in die Nut 5a bzw. 5b drängt. Die Seitenwand 4a wird somit sicher über das Halteteil 6 an dem Ständerprofil 2 gehalten, das über das Halteteil 6 bzw. das Seitenteil 4a zusätzlich stabilisiert wird, da der sonst offene Querschnitt geschlossen wird. Hierbei ist von Vorteil, dass die Schrauben 9 zunächst nur leicht angezogen werden, so dass die Einbauelemente 4 noch zur Ausrichtung entlang der Ständerprofile 2 verschoben werden können. Nach erfolgter Ausrichtung werden die Schrauben 9 dann festgezogen.

Nachdem nun das linke Seitenteil 4a an dem Ständerprofil 2 befestigt worden ist, wird das nächste Ständerprofil 2 in die Rahmenkonstruktion 1 eingefügt und mit dem rechten Seitenteil 4a des Einbauelementes 4 verbunden. Anschließend werden je nach Bedarf weitere Einbauelemente 4 montiert. Am Ende wird dann die Rahmenkonstruktion 1 fertig gestellt und in einem letzten Arbeitsschritt wird die Rahmenkonstruktion 1 mit Trockenbauplatten 15 verschlossen, die jeweils bündig an die Vorderflächen 4f der Seitenwände 4a anschließen.

Außerdem ist der Figur 5.3 zu entnehmen, dass im Randbereich der Trockenbauplatte 17 und der Anschlussfläche 13 bis in die Nähe der zur Kante reduzierten Vorderfläche 4f eine Armierungsbahn 18 vorgesehen ist, die in das Füllmaterial 19 eingebettet ist.

Zusätzlich kann in der Seitenwand 4a ein weiteres Paar Nuten 5a, 5b auf der gegenüberliegenden Seiten der Seitenwand 4a angeordnet werden, deren äußere Nut einen Abstand b von der Vorderkante 4f aufweist, die der doppelten Dicke einer Trockenbauplatte 17 entspricht. Somit kann eine bündige doppelte Beplankung vorgenommen werden, wenn das Einbauelement 4 um 180 Grad gedreht wird. Je nach Tiefe der Seitenwand 4a können insgesamt drei Nuten dann ausreichend sein, wobei die mittlere Nut sowohl bei der einseitigen als auch der zweiseitigen Beplankung zum Einsatz kommt.

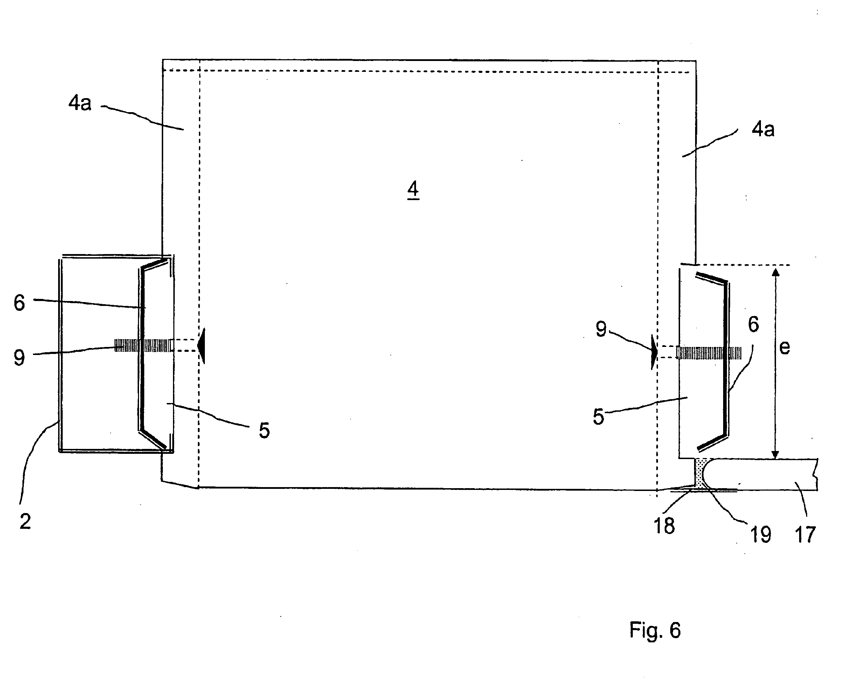

In der Figur 6 ist eine Draufsicht auf ein Einbauelement 4 in einer zweiten Ausführungsform gezeigt. Die zweite Ausführungsform betrifft insbesondere den Ersatz der beiden jeweils sehr schmalen Nuten 5a und 5b durch eine einzige breite Nut 5. Im Übrigen wird auf die Beschreibung zu der vorhergehenden Ausführungsform verwiesen. Die Klemmung des Ständerprofils 2 in der Nut 5 über das Halteteil 6 erfolgt auch wie zuvor beschrieben.

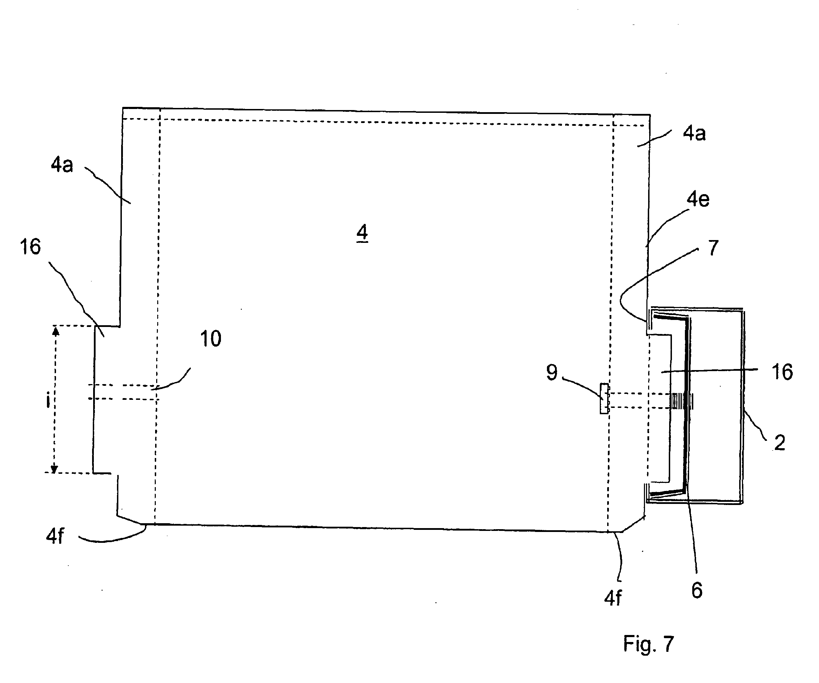

Die Figur 7 zeigt eine Draufsicht auf ein Einbauelement 4 in einer dritten Ausführungsform gezeigt. Die dritte Ausführungsform betrifft insbesondere den Ersatz der beiden jeweils sehr schmalen Nuten 5a und 5b gemäß ersten Ausführungsform durch eine Leiste 16, die auf der Außenfläche 4e der Seitenwand 4a im Bereich der sonst angeordneten Nuten 5a und 5b angeordnet ist. Diese Leiste 16 weist eine Breite i auf, die der Weite w der Öffnung 2a des Ständerprofils 2 entspricht. Hierdurch wird das mit seiner Öffnung 2a von außen auf die Leiste 16 aufgebrachte Ständerprofil 2 in Bezug auf die Vorderfläche 4f der Seitenwand 4a ausgerichtet. Der Bereich der Außenfläche 4e der Seitenwand 4a angrenzend an die Leiste 16 dient jeweils als Gegenfläche 7 für die Stege 2d der Ständerprofile 2. Im Übrigen wird auf die Beschreibung zu der vorhergehenden Ausführungsform verwiesen.

Für den Fall, dass die Einbauelemente 4 eine größere Tiefe aufweisen, können auch mehrere Nuten 5 bzw. Paare von Nuten 5a, 5b an den Seitenwänden 4a vorgesehen werden. Entsprechend werden dann auch weitere Ständerprofile 2 vorgesehen.

### Bezugszeichenliste

- 1: Rahmenkonstruktion
- 2: Ständerprofil
- 2a: Öffnung
- 2b: Basis
- 2c: Schenkel
- 2d: Steg
- 3: Rahmenprofil
- 4: Einbauelement
- 4a: Seitenwand
- 4b: Bodenwand
- 4c: Deckelwand
- 4d: Rückwand
- 4e: Außenfläche
- 4f: Vorderfläche
- 4g: Innenfläche
- 4h: Anlagefläche
- 5: Nut
- 5a: erste Nut
- 5b: zweite Nut
- 6: Halteteil
- 6a: Basisteil
- 6b: Schenkelteil
- 6c: äußerer Endbereich
- 7: Gegenfläche
- 8: Gewindebohrung
- 9: Schraube
- 9a: Kopf
- 10: Bohrung
- 11: äußere Seitenfläche
- 12: innere Seitenfläche
- 13: Anschlussfläche
- 14: Aussparung
- 15: Ecke
- 16: Leiste
- 17: Trockenbauplatte
- 18: Armierungsbahn
- 19: Füllmaterial

- a: Breite
- b: Abstand
- c: Abstand
- d: Breite
- e: Abstand
- f: Abstand
- g: Breite
- h: Höhe
- i: Breite
- w: Weite
- P: Richtung

## Patentansprüche

1. Anordnung, die eine Trockenbauwand und in dieser Trockenbauwand angeordnete Einbauelemente (4) umfasst, wobei die Trockenbauwand aus einer Rahmenkonstruktion (1) mit vertikalen Ständerprofilen (2), insbesondere standardisierten CW-Profilen, besteht, an denen die Einbauelemente (4) befestigt sind, wobei die Einbauelemente (4) über Halteteile (6) in einem Befestigungszustand klemmend an den Ständerprofilen (2) befestigt sind, wobei das Ständerprofil (2) einen c-förmigen Querschnitt hat, zwei eine Öffnung (2a) begrenzende und gegenüberliegende Stege (2d) an Schenkeln (2c) aufweist und im Befestigungszustand das Halteteil (6) den Steg (2d) hintergreift und das Einbauelement (4) zwischen zwei Ständerprofilen (2) über die Halteteile (6) befestigt ist, **dadurch gekennzeichnet, dass** die Einbauelemente (4) als Schrankkorpusse ausgebildet zur Aufbewahrung von Gegenständen ausgebildet sind, dass das Halteteil (6) im Befestigungszustand die Stege (2d) an das Einbauelement (4) drückt und dass die Anordnung weiter eine Schraube (9) enthält, wobei das Halteteil (6) über die Schraube (9) in den Befestigungszustand bringbar ist und die Schraube (9) von innerhalb des Einbauelements (4) anziehbar ist.

2. Anordnung nach Anspruch 1, **dadurch gekennzeichnet, dass** die Halteteile (6) derart ausgebildet sind, dass in einem Zwischenzustand die Halteteile (6) an den Einbauelementen (4) gehalten und für eine Ausrichtung der Einbauelemente (4) in Bezug auf die Ständerprofile (2) entlang der Ständerprofile (2) verschiebbar sind.

3. Anordnung nach Anspruch 1 oder 2, **dadurch gekennzeichnet, dass** die Einbauelemente (4) über die Halteteile (6) lösbar an den Ständerprofilen (2) befestigt sind.

4. Anordnung nach einem der Ansprüche 1 bis 3, **dadurch gekennzeichnet, dass** das Halteteil (6) klammerförmig mit zwei voneinander beabstandeten Schenkelteilen (6b) ausgebildet ist und im Befestigungszustand die Schenkelteile (6b) die Stege (2d) an das Einbauelement (4) drücken.

5. Anordnung nach einem der Ansprüche 1 bis 4, **dadurch gekennzeichnet, dass** das Einbauelement (4) Seitenwände (4a) aufweist, in den Außenflächen (4e) eine oder mehrere Nuten (5, 5a, 5b) angeordnet sind, die als Nutgrund Gegenflächen (7) und zumindest äußere Seitenflächen (11) aufweisen, und im Befestigungszustand, das Halteteil (6) das Ständerprofil (2) an die Gegenfläche (7) drückt.

6. Anordnung nach einem der Ansprüche 1 bis 5, **dadurch gekennzeichnet, dass** die Position des Einbauelements (4) in Bezug auf das Ständerprofil (2) im Sinne einer Einbautiefe über das Halteteil (6), das sich an eine äußere Seitenfläche (11) und/oder innere Seitenfläche (12) an dem Einbauelement (4) anlegt, bestimmt ist.

7. Anordnung nach Anspruch 6, **dadurch gekennzeichnet, dass** das Ständerprofil (2) mit seinem vorderen Schenkel (2c) im Befestigungszustand in einem Abstand (b) zu einer Vorderfläche (4f) des Einbauteils (4) angeordnet ist, der im Wesentlichen der Dicke einer an dem Ständerprofil (2) zu befestigenden Trockenbauplatte entspricht.

8. Anordnung nach Anspruch 6 oder 7, **dadurch gekennzeichnet, dass** die äußere Seitenfläche (11) und/oder innere Seitenfläche (12) parallel zu einer Vorderfläche (4f) des Einbauelements (4) verlaufen.

9. Anordnung nach einem der Ansprüche 5 bis 8, **dadurch gekennzeichnet, dass** in den Außenflächen (4e) der Seitenwände (4a) eine erste Nut (5a) und eine zweite Nut (5b) angeordnet sind, die voneinander beabstandet sind, so dass deren äußere Seitenflächen (11) einen Abstand (c) aufweisen, der im Wesentlichen der Breite (g) des Ständerprofils (2) entspricht, und die Breite (d) der Nuten (5a, 5b) im Wesentlichen jeweils der Breite (a) der Stege (2d) der Ständerprofile (2) entspricht.

10. Anordnung nach einem der Ansprüche 1 bis 9, **dadurch gekennzeichnet, dass** das Einbauelement (4) im Wesentlichen rechteckig ist und aus zwei Seitenwänden (4a), einer Bodenwand (4b), einer Rückwand (4c) und einer Deckelwand (4c) besteht.

11. Anordnung nach einem der Ansprüche 1 bis 10, **dadurch gekennzeichnet, dass** das Einbauelement (4) eine Vorderfläche (4f) aufweist, die eine Anschlussfläche (13) umfasst, um zwischen dem Einbauelement (4) und einer Trockenbauplatte (17) ein Füllmaterial (19) einzubringen, und die Anschlussfläche (13) gegenüber der Vorderfläche (4f) in Richtung des Ständerprofils (2) zurückweicht.

12. Anordnung nach Anspruch 11, **dadurch gekennzeichnet, dass** die Anschlussfläche (13) eine schräge Ebene ist, die an einer inneren Kante der Vorderfläche (4f) beginnt.

13. Anordnung nach Anspruch 12, **dadurch gekennzeichnet, dass** auf der Anschlussfläche (13) ein die Haftung für das Füllmaterial (19) erhöhendes Element angeordnet ist.

14. Verfahren zur Befestigung von Einbauelementen (4) in einer Trockenbauwand innerhalb einer Anordnung nach den Ansprüchen 1 bis 13, wobei die Trockenbauwand einer Rahmenkonstruktion (1) mit vertikalen Ständerprofilen (2), insbesondere standardisierten CW-Profilen, aufweist, an denen die Einbauelemente (4) befestigt sind, mit den folgenden Schritten:
Befestigen eines klammerförmigen Halteelementes (6) mit Schenkelteilen (6b) über eine Schraube (9) an einer Seitenwand (4a) des Einbauelements (4) in der Weise, das die Schenkelteile (6b) zur Anlage an Gegenflächen (7) in einer Nut (5, 5a, 5b) des Einbauelements (4) kommen,
Eindrücken des Halteelements (6) in eine Öffnung (2a) des Ständerprofils (2), wodurch das Ständerprofil (2) mit seinen Schenkeln (2c) aufgeweitet wird und der Schenkel (2c) mit seinen Stegen (2d) zur Anlage an die Gegenfläche (7) kommt,
Herausschieben des Halteelements (6) aus der bzw. den Nuten (5, 5a, 5b) über die Schraube (9) von innerhalb des Einbauelements (4) in Richtung des Ständerelements (2),
Hineinbewegen der Schenkel (2c) mit seinen Stegen (2d) in die Nut (5) bzw. die Nuten (5a, 5b),
Anziehen der Schraube (9) von innerhalb des Einbauelements (4), wodurch das Halteelement (9) in Richtung des Einbauelements (4) bewegt wird und die Stege (2d) auf die Gegenfläche (7) der Seitenwand (4a) drückt.

## Claims

1. Arrangement which comprises a studwork wall and insert elements (4) arranged in said studwork wall, the studwork wall comprising a frame structure (1) having vertical upright-forming profiles (2), and in particular standardised C-profiles, to which the insert elements (4) are fastened, the insert elements (4), when in a fastened state, being fastened by clamping to the upright-forming profiles (2) by means of retaining parts (6), the upright-forming profile (2) being C-shaped in cross-section and having, on side-portions (2c), two lips (2d) in opposite positions which define an opening (2a) and the retaining part (6) fitting behind the lips (2d) in the fastened state and the insert element (4) being fastened in place between two upright-forming profiles (2) by means of the retaining parts (6), **characterised in that** the insert elements (4) are in the form of cabinet carcasses for storing articles, **in that** the retaining part (6) presses the lips (2d) against the insert element (4) in the fastened state, and **in that** the arrangement also includes a screw or bolt (9), the retaining part (6) being able to be brought into the fastened state by means of the screw or bolt (9) and the screw or bolt (9) being able to be tightened from inside the insert element (4).

2. Arrangement according to claim 1, **characterised in that** the retaining parts (6) are so designed that, in an intermediate state, said retaining parts (6) are held to the insert elements (4) and are displaceable along the upright-forming profiles (2) to allow the insert elements (4) to be aligned relative to the upright-forming profiles (2).

3. Arrangement according to claim 1 or 2, **characterised in that** the insert elements (4) are fastened to the upright-forming profiles (2) by means of the retaining parts (6) in such a way as to be detachable.

4. Arrangement according to one of claims 1 to 3, **characterised in that** the retaining part (6) is of a clip-like form having two leg-portions (6b) which are spaced away from one another, and in the fastened state these leg-portions (6b) press the lips (2d) against the insert element (4).

5. Arrangement according to one of claims 1 to 4, **characterised in that** the insert element (4) has side-walls (4a) in whose outer faces (4e) there are arranged one or more grooves (5, 5a, 5b) which have mating faces (7) in the form of the floors of the grooves and at least outer side-faces (11), and in the fastened state the retaining part (6) presses the upright-forming profile (2) against the mating face (7).

6. Arrangement according to one of claims 1 to 5, **characterised in that** the position of the insert element (4) relative to the upright-forming profile (2), meaning a depth of insertion, is determined by means of the retaining part (6), which bears against an outer side-face (11) and/or an inner side-face (12) in the insert element (4).

7. Arrangement according to claim 6, **characterised in that**, in the fastened state, the front side-portion (2c) of the upright-forming profile (2) is arranged at a distance (b) from a front face (4f) of the insert element (4) which substantially corresponds to the thickness of a cladding panel or sheet to be fastened to the upright-forming profile (2).

8. Arrangement according to claim 6 or 7, **characterised in that** the outer side-face (11) and/or inner side-face (12) extend parallel to a front face (4f) of the insert element (4).

9. Arrangement according to one of claims 5 to 8, **characterised in that** there are arranged in the outside faces (4e) of the side-walls (4a) a first groove (5a) and a second groove (5b) which are spaced away from one another such that the outer side-faces (11) of these latter are at a distance (c) from one another which substantially corresponds to the width (g) of the upright-forming profile (2), and the widths (d) of the grooves (5a, 5b) each substantially correspond to the width (a) of the lips (2d) of the upright-forming profiles (2).

10. Arrangement according to one of claims 1 to 9, **characterised in that** the insert element (4) is substantially square or rectangular and comprises two side-walls (4a, a bottom wall (4b), a rear wall (4c) and a top wall (4c).

11. Arrangement according to one of claims 1 to 10, **characterised in that** the insert element (4) has a front face (4f) which comprises a mating surface (13) to allow an filler material (19) to be introduced between the insert element (4) and a cladding panel or sheet (17), and the mating surface (13) recedes towards the upright-forming profile (2) relative to the front face (4f).

12. Arrangement according to claim 11, **characterised in that** the mating surface (13) is an inclined plane which begins at an inner edge of the front face (4f).

13. Arrangement according to claim 12, **characterised in that** a member which increases adhesion to the filler material (19) is arranged on the mating surface (13).

14. Method of fastening insert elements (4) in a studwork wall within an arrangement according to claims 1 to 13, the studwork wall comprising a frame structure (1) having vertical upright-forming profiles (2), and in particular standardised C-profiles, to which the insert elements (4) are fastened, the method having the following steps:
fastening of a retaining part (6) in clip form having leg-portions (6b) to a side-wall (4a) of the insert element (4) by means of a screw or bolt (9), in such a way that the leg-portions (6b) come to bear against mating faces (7) in a groove (5, 5a, 5b) in the insert element (4),
pressing of the retaining part (6) into an opening (2a) in the upright-forming profile (2), whereby the side-portions (2c) of the upright-forming profile (2) are spread apart and the side-portion (2c) comes to bear against the mating face (7) by its lips (2d),
from inside the insert element (4), urging of the retaining part (6) out of the grooves or grooves (5, 5a, 5b) by means of the bolt or screw (9) in the direction of the upright-forming profile (2),
moving of the side-portion (2c) into the groove (5) or grooves (5a, 5b) by its lips (2d),
tightening of the screw or bolt (9) from inside the insert element (4), whereby the retaining part (6) is moved towards the insert element (4) and presses the lips (2d) against the mating face (7) in the side-wall (4a).

## Revendications

1. Système comportant une paroi de construction sèche et des éléments d'insertion (4) disposés dans cette paroi de construction sèche, la paroi de construction sèche étant constituée d'un cadre (1) comportant des montants profilés verticaux (2), notamment des profilés CW normalisés, auxquels sont fixés les éléments d'insertion (4), les éléments d'insertion (4) étant fixés aux montants profilés (2) par serrage au moyen d'éléments de maintien (6) dans l'état de fixation, le montant profilé (2) ayant une section transversale en forme de C et comportant au niveau de flancs (2c) deux nervures (2d) opposées et délimitant une ouverture (2a) et l'élément de maintien (6) s'engageant dans l'état de fixation en arrière de la nervure (2d) et l'élément d'insertion (4) étant fixé entre les deux montants profilés (2) au moyen des éléments de maintien (6), **caractérisé en ce que** les éléments d'insertion (4) sont configurés en corps d'armoire destinés au rangement d'objets, **en ce que** l'élément de maintien (6) presse dans l'état de fixation les nervures (2d) contre l'élément d'insertion (4) et **en ce que** le système comporte en outre une vis (9), l'élément de maintien (6) pouvant être amené dans l'état de fixation au moyen de la vis (9) et la vis (9) étant serrée depuis l'intérieur de l'élément d'insertion (4).

2. Système selon la revendication 1, **caractérisé en ce que** les éléments de maintien (6) sont configurés de telle sorte que dans un état intermédiaire les éléments de maintien (6) sont maintenus contre les éléments d'insertion (4) et peuvent être déplacés le long des montants profilés (2) afin d'aligner les éléments d'insertion (4) par rapport aux montants profilés (2).

3. Système selon la revendication 1 ou 2, **caractérisé en ce que** les éléments d'insertion (4) sont fixés de manière amovible aux montants profilés (2) au moyen des éléments de maintien (6).

4. Système selon l'une des revendications 1 à 3, **caractérisé en ce que** l'élément de maintien (6) est configuré sous la forme de pince qui comporte deux ailes (6b) espacées l'une de l'autre et dans l'état de fixation les ailes (6b) pressent les nervures (2d) contre l'élément d'insertion (4).

5. Système selon l'une des revendications 1 à 4, **caractérisé en ce que** les éléments d'insertion (4) comportent des parois latérales (4a), **en ce qu'**une ou plusieurs rainures (5, 5a, 5b) sont ménagées dans les faces extérieures (4e), lesquelles rainures comportent en tant que fond de rainure des faces antagonistes (7) et au moins des faces latérales extérieures (11), et **en ce que** dans l'état de fixation l'élément de maintien (6) presse le montant profilé (2) contre la face antagoniste (7).

6. Système selon l'une des revendications 1 à 5, **caractérisé en ce que** la position de l'élément d'insertion (4) par rapport au montant profilé (2) dans le sens de la profondeur d'insertion est déterminée au moyen de l'élément de maintien (6) qui s'appuie contre une face latérale extérieure (11) et/ou une face latérale intérieure (12) au niveau de l'élément d'insertion (4).

7. Système selon la revendication 6, **caractérisé en ce que** le montant profilé (2) est disposé avec son flanc avant (2c) dans l'état de fixation à une distance (b) d'une face avant (4f) de l'élément d'insertion (4), laquelle distance correspond sensiblement à l'épaisseur d'un panneau de construction sèche à fixer au montant profilé (2).

8. Système selon la revendication 6 ou 7, **caractérisé en ce que** la face latérale extérieure (11) et/ou la face latérale intérieure (12) s'étendent parallèlement à une face avant (4f) de l'élément d'insertion (4).

9. Système selon l'une des revendications 5 à 8, **caractérisé en ce que** dans les faces extérieures (4e) des parois latérales (4a) sont ménagées une première rainure (5a) et une seconde rainure (5b) qui sont espacées l'une de l'autre de telle sorte que leurs faces latérales extérieures (11) sont disposées à une distance (c) qui correspond sensiblement à la largeur (g) du montant profilé (2) et de telle sorte que la largeur (d) de chacune des rainures (5a, 5b) correspond sensiblement à la largeur (a) des nervures (2d) des montants profilés (2).

10. Système selon l'une des revendications 1 à 9, **caractérisé en ce que** l'élément d'insertion (4) a une forme sensiblement rectangulaire et est constitué de deux parois latérales (4a), d'une paroi de fond (4b), d'une paroi arrière (4c) et d'une paroi supérieure (4d).

11. Système selon l'une des revendications 1 à 10, **caractérisé en ce que** l'élément d'insertion (4) comporte une face avant (4f) qui comprend une face de raccordement (13) pour introduire une matière de remplissage (19) entre l'élément d'insertion (4) et un panneau de construction sèche (17) et **en ce que** la face de raccordement (13) est en retrait par rapport à la face avant (4f) en direction du montant profilé (2).

12. Système selon la revendication 11, **caractérisé en ce que** la face de raccordement (13) est un plan incliné qui débute au niveau d'un bord intérieur de la face avant (4f).

13. Système selon la revendication 12, **caractérisé en ce qu'**un élément d'accroissement de l'adhérence de la matière de remplissage (19) est disposé sur la face de raccordement (13).

14. Procédé de fixation d'éléments d'insertion (4) dans une paroi de construction sèche à l'intérieur d'un système selon les revendications 1 à 13, la paroi de construction sèche comportant un cadre (1) pourvu de montants profilés verticaux (2), notamment de profilés CW normalisés, auxquels sont fixés les éléments d'insertion (4), ledit procédé comprenant les étapes suivantes consistant à :
fixer un élément de maintien (6) en forme de pince pourvu d'ailes (6b) à une paroi latérale (4a) de l'élément d'insertion (4) au moyen d'une vis (9) de façon à ce que les ailes (6b) viennent en appui contre des faces antagonistes (7) situées dans une rainure (5, 5a, 5b) de l'élément d'insertion (4),
presser l'élément d'insertion (6) dans une ouverture (2a) du montant profilé (2) de façon à élargir le montant profilé (2) pourvu de ses flancs (2c) et à amener le flanc (2c) pourvu de sa nervure (2d) en appui contre la face antagoniste (7),
retirer l'élément de maintien (6) de la nervure ou des rainures (5, 5a, 5b) au moyen de la vis (9) depuis l'intérieur de l'élément d'insertion (4) en direction du montant (2),
insérer les flancs (2c) pourvus de leurs nervures (2d) dans la rainure (5) ou les rainures (5a, 5b),
serrer la vis (9) depuis l'intérieur de l'élément d'insertion (4) de façon à déplacer l'élément de maintien (6) en direction de l'élément d'insertion (4) et à presser les nervures (2d) sur la face antagoniste (7) de la paroi latérale (4a).
